# EUROPEAN PATENT SPECIFICATION

(11) **EP 1 125 422 B1**
(45) Date of publication and mention of the grant of the patent: **14.06.2006**
(21) Application number: 99953453.0
(22) Date of filing: 29.10.1999
(51) Int. Cl.: H04L 29/12, H04L 12/24

(54) **DIGITAL NETWORK MODEM AND CONFIGURATION SYSTEM FOR A DIGITAL NETWORK MODEM**
DIGITALES NETZMODEM UND KONFIGURATIONSVORRICHTUNG FÜR EIN DIGITALES NETZMODEM
MODEM DE RESEAU NUMERIQUE ET SYSTEME DE CONFIGURATION POUR UN MODEM DE RESEAU NUMERIQUE

(30) Priority: 30.10.1998 CA 2252207
(43) Date of publication of application: 22.08.2001
(73) Proprietor: Eicon Technology Corporation, Montreal, Québec H4M 2V9 (CA); Eicon Technology Manufacturing Europe Limited, 18 Dublin (IE)
(72) Inventor: MOINEAU, Gilbert, Lachine, Québec H8T 3N3 (CA); MAHER, Tom, 18 Dublin (IE); O'HARA, Daniel, 15 Dublin (IE)
(74) Representative: Betten & Resch
(86) International application number: PCT/CA1999/001013
(87) International publication number: WO 2000/027093

(56) References cited:
- WO-A-98/26548
- LOUCKS W M ET AL: "IMPLEMENTATION OF A DYNAMIC ADDRESS ASSIGNMENT PROTOCOL IN A LOCAL AREA NETWORK" COMPUTER NETWORKS AND ISDN SYSTEMS,NL,NORTH HOLLAND PUBLISHING. AMSTERDAM, vol. 11, no. 2, February 1986 (1986-02), pages 133-146, XP000811184 ISSN: 0169-7552
- GOPAL I S ET AL: "DYNAMIC ADDRESS ASSIGNMENT PROTOCOLS" PROCEEDINGS. IEEE INFOCOM, THE CONFERENCE ON COMPUTER COMMUNICATIONS. ANNUAL JOINT CONFERENCE OF THE IEEE COMPUTER AND COMMUNICATIONS SOCIETIES. GATEWAY TO THE 21ST CENTURY,April 1984 (1984-04), XP000811928
- B. CROFT, J. GILMORE: "Bootstrap protocol (BOOTP)" REQUEST FOR COMMENT, [Online] September 1985 (1985-09), XP002132750 Retrieved from the Internet: <URL:http://www.faqs.org/rfcs/rfc951.html> [retrieved on 2000-03-10]

## Description

### Field of the Invention

The present invention relates to a digital network modem, such as an ISDN or a DSL modem, and more particularly to a digital network modem having a modem address configuration system.

### Background of the Invention

When installing new equipment to be connected to a network, such as a local area network (LAN), it is necessary to assign an (Internet protocol) IP network address to the new equipment, and a variety of methods for doing so are used. The most basic form of address management is to manually assign an IP address to the new equipment by directly setting or programming the network address at the new equipment using knowledge (i.e. a list) of IP addresses already used on the network, so as to be able to select a new and available address. The network manager or administrator is thus the "keeper" of the list of used addresses, and he or she is required to install any new equipment on the network. It is also common for the equipment to have a factory set IP address, and for the network administrator to use the factory address if it is within the range of usable addresses on the network, and it is not already assigned to a different device. If the factory set address is not compatible with the range of addresses used on the LAN, it is necessary to change the IP address of the new equipment.

To change the static IP address of new equipment to be compatible with the LAN requires an input interface. It is known to use a communications interface on the equipment to which a console can be connected to provide the input interface, and it is also known to use DIP switches on the equipment for setting the static address. These options either require considerable effort and/or extra equipment.

To facilitate the management of IP addresses in local area networks (LANs), it is known to provide servers called dynamic host configuration protocol or DHCP servers. These servers respond to requests from clients connected to the network to receive assigned dynamic IP addresses for communication purposes on the network. The advantage of using such a dynamic IP address assignment is that new clients can be added easily, and the effort to manage the addresses used on the network is reduced. In most cases, a DHCP server is provided by software added to a network server.

While DHCP can be adapted for use in assigning static IP addresses, it is often preferred to allow only the network administrator the ability to assign static addresses. Static IP addresses are required by certain types of equipment, usually network resource equipment, such as modems or servers.

When a network which was previously not connected to other networks or when a network needs a faster or additional connection to other networks, digital network modems are added to provide the desired connection. Network modems, such as ISDN modems, are assigned a static IP address on the LAN. When a DHCP server is provided on the LAN, clients on the LAN are assigned their IP addresses and can recognize the modem as a router or gateway by consulting the DHCP, and in this way, each client does not need to have prior knowledge of any fixed IP address for the modem.

Computer networks are being installed in more and more residential, office and industrial environments, and the increase in the number of such networks has increased the need for skilled technicians required to configure and maintain such networks. While computer networks were very uncommon a few years ago for home users, it is now economically feasible and desirable to interconnect computer devices in a home environment Any simplification of the task of network management is important from the perspective of both increased reliability and reduced training for the network manager.

The article by Loucks W M et al entitled "Implementation Of A Dynamic Address Assignment Protocol In A Local Area Network" and published in 1986 describes an implementation of a dynamic address assignment protocol in a local area network using a nameserver for automatically assigning addresses to stations when the network is started.

An international patent application number WO 98 26548 to Archie L Cobbs and Jim Y Li describes a mechanism for an automatic configuration for an Internet access device using static and dynamic addresses.

### Summary of the invention

It is an object of the invention to provide in a digital network modem a mechanism for initializing a static IP address for the modem on the LAN via communication with a configuration station on the LAN.

According to the invention a network modem has an initialization control module for setting its static IP address remotely via the local network in response to a request by a configuration station. The configuration station sends a request on the local network to the modem to obtain identification and static IP address from the modem, receives a response from the modem and displays the static IP address , accepts user input to set the static IP address, and sends a request on the local network to the modem to set the static IP address. The system allows a user to set the static IP address for the modem, configure the modem settings, as well as the settings for the station. The system is easy to use and can work even if initial modem and configuration station communications parameters are incompatible.

The invention thus provides a network modem device configuration system connected to a modem via a local network, the system comprising a first module sending a request on the local network to the modem to obtain identification and static IP address from the modem, a second module receiving a response from the modem and displaying the static IP address, a third module accepting user input to set the static IP address, and a fourth module sending a request on the local network to the modem to set the static address. Preferably, the system further comprises a fifth module testing the static address on the network and, when the testing fails to validate operation of the static address for the modem, one of displaying an error message and prompting the user to input new data for the static address. Preferably, the first module sends a broadcast discover message on the local network to the modem on a specific IP port to solicit a response identifying the modem, the second module receives and decodes a response from the modem to obtain the identification and static IP address, and the fourth module broadcasts on the local network to the modem a message including the identification of the modem and an identification of the set static address.

Preferably, the system also comprises a parameter setting interface system allowing modem parameters to be set at the configuration system. The parameter setting interface system may include a save and restore mechanism allowing the modem parameters to be saved in storage external from the modem and restored to the modem from the storage. The parameter setting interface system is preferably provided by a web browser displaying pages requested from the modem, and the system advantageously comprises a sixth module for launching the web browser with an HTTP request addressed to the static address.

The configuration system according to the invention may be provided by software running in a client station connected to the local network. Therefore, the invention also provides a computer program product, as well as a method of transmitting a data signal which comprises a computer program executable in the client station for providing the configuration system according to the invention.

According to a further aspect of the present invention, there is provided a method for initializing a static IP address of a network modem device on a local network, comprising the steps of : broadcasting a request from a configuration station onto the local network; receiving a response to the request at the configuration station from the network modem device comprising an identification for the network modem device, the identification comprising at least an IP address for the network modem device; verifying a compatibility of the identification with settings for the local network; if the identification is compatible with the settings, send a confirmation message with the identification to the network modem device and receive a confirmation response from the network modem device; if the identification is not compatible with the settings, send a new address message comprising a new IP address for the network modem device, receive a change of IP response from the network modem device, send a new address confirmation message with the new IP address to the network modem device and receive a new address confirmation response from the network modem device.

All aspects of the invention can be provided as computer code means which carried out the steps of the methods or which embody the system once loaded in the client computer, the computer code means being embodied either as a computer readable medium or as an electrical or electro-magnetical signal.

### Brief Description of the Drawings

The invention will be better understood by way of the following detailed description of a preferred embodiment with reference to the appended drawings, in which:
Fig. 1 is a schematic block diagram of the LAN ISDN modem according to the preferred embodiment connected to a LAN to which a configuration station and a network DHCP server are also connected; and
Fig. 2 is a flow chart illustrating the steps following in configuring and installing the modem using a configuration station.

### Detailed Description of the Preferred Embodiment

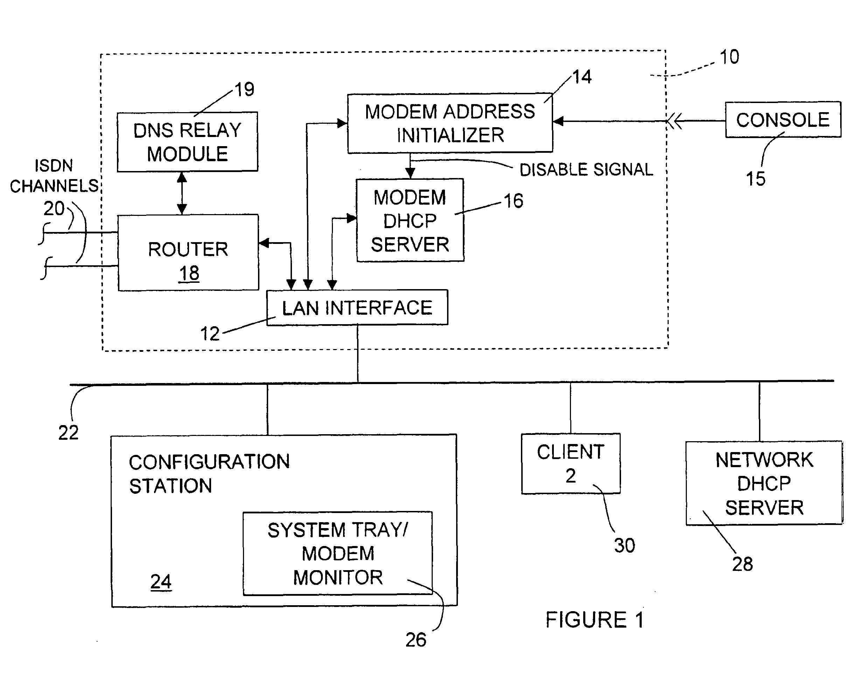

As illustrated in Fig. 1, the digital modem 10 according to the preferred embodiment is an ISDN modem having a plurality of functional components shown in Fig. 1. The separation of components illustrated in the separate blocks in Fig. 1 is for the purposes of illustration only, and does not necessarily reflect the physical separation of components in the real device which is built from both hardware and software/firmware components.

In accordance with the present invention, the modem 10 may be installed in the network environment by assigning it an IP address either by direct connection or via the network. The address initializer module 14 provided in modem 10 communicates both with LAN interface 12 and a serial port in communication with a console 15. The console 15 may be provided by a PC running a terminal program. The modem is preferably provided with a factory IP address (192.168.1.1) which is first tried. If the factory installed address is not usable, the following mechanism is used to install the modem 10 on the existing network where the IP addresses are already defined. In the prior art, the network IP address for the modem was communicated to the modem by using a console connected to the modem by a serial port, and thus the IP address for the modem was not set through the network (it is also known in the art to allow the IP address to be set in the factory, by keyboard input or by DIP switches).

The modem 10 must have a static IP address (i.e. a dynamic address from either DHCP server 28 or 16 is not to be used), and configuration station 24 is used in configuring the IP address for the modem 10 via the LAN 22. The configuration station 24 may have a static IP address or it may be a DHCP client and have a dynamic IP address. A system tray or modem monitor program 26 in the configuration station is used to assign modem 10 its static IP address.

In the preferred embodiment, modem 10 communicates with configuration station 24 either using HTML pages and an IP connection, or using menus with a terminal connection via LAN 22 or console 15.

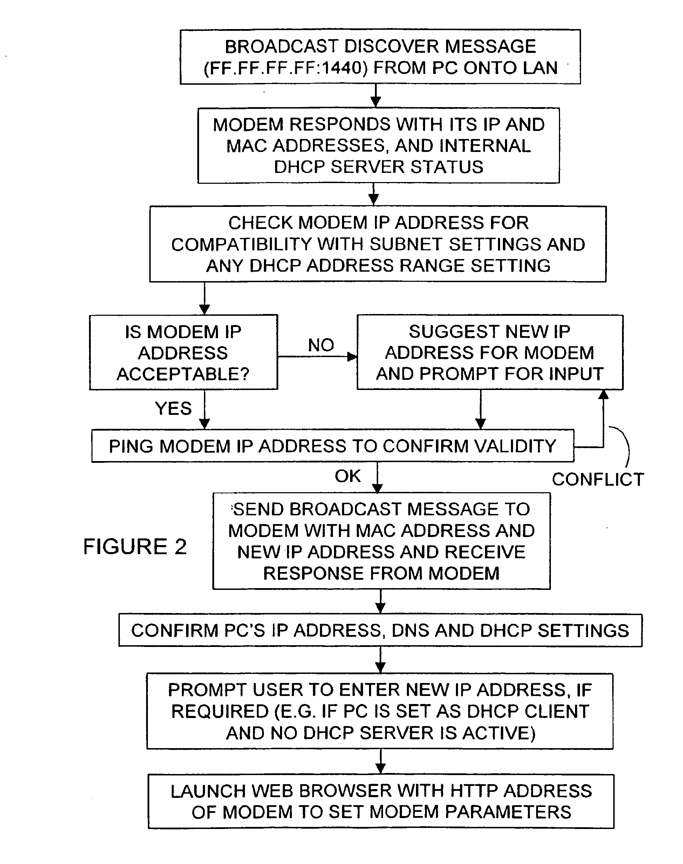

As illustrated in Fig. 2, the steps involved in configuring modem 10 in the preferred embodiment can be described as follows. The modem 10 is connected to LAN 22 and powered on. The modem has a factory set static IP address, and initializer 14 is able to communicate either with station 24 or console 15 to receive a command to change its address. When the address change is done using the station 24, the modem monitor 26 is used to determine, confirm and set the static IP address in the modem 10 by communicating via LAN 22 with the initializer 14.

To communicate with modem 10 initially, the system tray 26 discovers the modem 10 by sending a broadcast packet on a predetermined proprietary port 1440. If modem 10 and the configuration station 24 are not on the same subnet, the system tray 26 can ask modem 10 to change its address to be on the same sub-net. The system tray 26 thus sends a proprietary discovery user datagram protocol (UDP) broadcast message to a predetermined port, (e.g. the port chosen in the preferred embodiment is 1440, and thus the address is FF.FF.FF.FF: 1440), which broadcast message is detected by initializer 14. In response to the broadcast, initializer 14 sends a reply broadcast message to port 1440, namely to address FF.FF.FF.FF:1440, including the MAC address of modem 10 in the packet. The modem monitor 26 then sends a broadcast packet to port 1440 including in the packet the MAC address of modem 10 along with the static IP address to be used. Initializer 14 recognizes its own MAC address in the packet broadcast from the system tray 26 and sets the IP address for the modem 10 to the address contained in the packet.

In selecting the IP address for modem 10, the configuration station is equipped with software, namely utility programs called Wizards, to help the user of station 24 install modem 10 by finding an available address for modem 10 on network 22. Such programs provide a list of all used static addresses, as well as the range of addresses reserved for dynamic allocation. The address for modem 10 must also be identified as a gateway or router and, in the preferred embodiment, as a domain name server (DNS) since modem 10 includes a DNS relay module 19. The system tray 26 has an interface allowing the network manager to enter an appropriate static IP address for the modem. The static address should be outside the range of DHCP addresses, or it should otherwise be reserved as a static address. If station 24 is a DHCP client and get its address from DHCP Server 16, the modem IP address can be assumed to be correct. However, in all cases, a ping message is sent by station 24 to the defined IP address before setting the modem's IP address to ensure that it is unique and valid. At this stage, the entered static IP address is validated.

The configuration station 24 may also require to have its network setting adjusted as a result of the installation of the modem onto the LAN 22. As illustrated in Fig. 2, when the station 24 is a DHCP client, and there is no DHCP server, it is necessary to enter a static address of the station 24, and the modem monitor 26 provides this interface. Likewise, changes to the DHCP status, DNS and subnet parameters, which are caused by the introduction of the modem 10 can be set using the settings interface provided by the modem monitor 26. The modem monitor can also obtain information about the network, such as the status of DHCP servers on the network, by requesting the modem 10 to carry out communications task on the LAN 22, which the station 24, configured conventionally, can have difficulty carrying out itself. In this way, the modem 10 is used as a network resource for helping the modem monitor 26 perform its functions.

Once the static address has been confirmed, the modem monitor launches a web-based configuration interface for allowing the network administrator to set the modem parameters. The web-based interface, namely a web browser, is launched to automatically initiate an HTTP request to the validated IP address of the modem. The modem parameters include the ISDN numbers, connection time parameters, external DNS addresses, activation of the internal DNS caching and listing functions, editing of the modem's DNS list, DHCP parameters for the built-in DHCP server 16, password data, etc. These parameters can optionally be saved at station 24 for back-up purposes, and the modem web-based configuration interface allows for both saving of these parameter to storage at station 24 as well as restoring of the parameters from storage at station 24.

## Claims

1. A network modem device configuration system (24) connected to a modem (10) via a local network (22), the system comprising
a first module sending a request on said local network (22) to said modem (10) to obtain identification and static IP address data from said modem,
a second module receiving a response from said modem and displaying said static IP address,
a third module accepting user input to set said static IP address, and
a fourth module sending a request on said local network to said modem to set said static IP address.

2. The system according to claim 1, further comprising a fifth module testing said static address on said network and, when said testing fails to validate operation of said static address for said modem (10), preventing said fourth module from sending the request on said local network to said modem to set said static IP address, and one of displaying an error message and prompting said user to input new data for said static address.

3. The system according to claim 1 or 2, wherein said first module sends a broadcast discover message on said local network (22) to said modem (10) to solicit a response identifying said modem, said second module receiving and decoding a response from said modem to obtain said identification and static IP address, and said fourth module broadcasts on said local network to said modem a message including said identification of said modem and an identification of said set static address.

4. The system according to claim 2 or 3, wherein said broadcast message sent by said first and fourth modules, and received by said second module is transmitted on a proprietary port.

5. The system according to any one of claims 1 to 4, further comprising a parameter setting interface system allowing modem parameters to be set at said configuration system (24).

6. The system according to claim 5, wherein said parameter setting interface system includes a save and restore mechanism allowing said modem parameters to be saved in storage external from said modem and restored to said modem from said storage.

7. The system according to claim 5 or 6, wherein said parameter setting interface system is provided by a web browser displaying pages requested from said modem, said system further comprising a sixth module, for launching said web browser with an HTTP request addressed to said static address.

8. The system according to claim 5, 6 or 7, wherein said modem is an ISDN modem, said modem parameters are selected from said group consisting of DHCP configuration settings, DNS settings, and ISDN connection settings.

9. The system according to any one of claims 1 to 8, wherein said system is a client station, further comprising a seventh module allowing a network configuration of said station to be set in consideration of changes to said local network due to an addition of said modem to said local network.

10. A method for initializing a static IP address of a network modem device on a local network, comprising the steps of :
broadcasting a request from a configuration station (24) onto said local network (22);
receiving a response to said request at said configuration station (24) form said network modem device (10) comprising an identification for said network modem device, said identification comprising at least an IP address for said network modem device (22);
verifying a compatibility of said identification with settings for said local network;
if said identification is compatible with said settings, send a confirmation message with said identification to said network modem device and receive a confirmation response from said network modem device;
if said identification is not compatible with said settings, send a new address message comprising a new IP address for said network modem device, receive a change of IP response from said network modem device, send a new address confirmation message with said new IP address to said network modem device and receive a new address confirmation response from said network modem device.

11. The method according to claim 10, wherein said request by said configuration station comprises a broadcast message, and said identification comprises an IP address, a MAC address and an internal DHCP server status for said network modem device.

12. The method according to claim 11, wherein said messages from said configuration station (24) and said responses from said modem (10) are sent on a proprietary port.

13. The method according to claim 11 or 12, wherein said modem further comprises an integrated DHCP server (16), and said message sent from said modem further includes an activation status of said DHCP server.

14. The method according to claim 13, wherein said modem automatically detects a presence of a network DHCP server (28) on said local network (22) and disables said integrated DHCP server (16) when a network DHCP server (28) is present on said local network (22).

15. The method according to any one of claims 10 to 14, to wherein said device is a digital network modem.

16. The method according to claim 15, wherein said device is an ISDN modem.

17. The method according to any one of claims 10 to 16, further comprising a parameter setting interface system allowing modem parameters to be set by remote connection via said local network (22).

18. The method according to claim 17, wherein said interface system is provided by a web host mechanism.

19. The method according to claim 18, wherein said web host mechanism provides for saving said modem parameters to, and restoring said modem parameters from, said remote connection.

20. A computer program comprising code means, embodied on a computer-readable medium, which when loaded into a computer, performs all the method steps of any one of claims 10 to 19.

21. A computer program comprising code means, embodied as an electrical or electro-magnetical signal, which when loaded into a computer, performs all the method steps of any one of claims 10 to 19.

## Patentansprüche

1. Netz-Modemvorrichtung-Konfigurationssystem (24), das über ein lokales Netz (22) mit einem Modem (10) verbunden ist und umfasst:
ein erstes Modul, das auf dem lokalen Netz (22) eine Anforderung an das Modem (10) sendet, um Kennungsdaten und Daten einer statischen IP-Adresse von dem Modem zu erhalten,
ein zweites Modul, das eine Antwort von dem Modem empfängt und die statische IP-Adresse anzeigt,
ein drittes Modul, das eine Anwendereingabe annimmt, um die statische IP-Adresse zu setzen, und
ein viertes Modul, das eine Anforderung auf dem lokalen Netz zu dem Modem sendet, um die statische IP-Adresse zu setzen.

2. System nach Anspruch 1, das ferner ein fünftes Modul umfasst, das die statische Adresse in dem Netz testet und dann, wenn der Test die Operation der statischen Adresse für das Modem (10) nicht validieren kann, das vierte Modul daran hindert, die Anforderung auf dem lokalen Netz zu dem Modem zu senden, um die statische IP-Adresse zu setzen, und entweder eine Fehlernachricht anzeigt oder den Anwender auffordert, neue Daten für die statische Adresse einzugeben.

3. System nach Anspruch 1 oder 2, bei dem das erste Modul eine Rundsendeaufdeckungsnachricht auf dem lokalen Netz (22) zu dem Modem (10) sendet, um eine das Modem identifizierende Antwort abzurufen, wobei das zweite Modul eine Antwort von dem Modem empfängt und decodiert, um die Kennung und die statische IP-Adresse zu erhalten, und das vierte Modul auf dem lokalen Netz zu dem Modem eine Nachricht rundsendet, die die Kennung des Modems und eine Kennung der gesetzten statischen Adresse enthält.

4. System nach Anspruch 2 oder 3, bei dem die von dem ersten und dem vierten Modul gesendete und von dem zweiten Modul empfangene Rundsendenachricht an einem proprietären Port gesendet wird.

5. System nach einem der Ansprüche 1 bis 4, das ferner ein Parametereinstellungs-Schnittstellensystem umfasst, das ermöglicht, Modemparameter in dem Konfigurationssystem (24) zu setzen.

6. System nach Anspruch 5, bei dem das Parametereinstellungs-Schnittstellensystem einen Sicherungs- und Wiederherstellungsmechanismus enthält, der ermöglicht, die Modemparameter in einem Speicher außerhalb des Modems zu sichern und sie für das Modem aus dem Speicher wiederherzustellen.

7. System nach Anspruch 5 oder 6, bei dem das Parametereinstellungs-Schnittstellensystem durch einen Web-Browser bereitgestellt wird, der Seiten anzeigt, die von dem Modem angefordert werden, wobei das System ferner ein sechstes Modul umfasst, um den Web-Browser mit einer an die statische Adresse adressierten HTTP-Anforderung zu starten.

8. System nach Anspruch 5, 6 oder 7, bei dem das Modem ein ISDN-Modem ist, wobei die Modemparameter aus der Gruppe ausgewählt sind, die aus DHCP-Konfigurationseinstellungen, DNS-Einstellungen und ISDN-Verbindungseinstellungen ausgewählt sind.

9. System nach einem der Ansprüche 1 bis 8, wobei das System eine Client-Station ist und ferner ein siebtes Modul umfasst, das ermöglicht, eine Netzkonfiguration der Station im Hinblick auf Änderungen des lokalen Netzes aufgrund einer Hinzufügung des Modems zu dem lokalen Netz zu setzen.

10. Verfahren zum Initialisieren einer statischen IP-Adresse einer Netz-Modemvorrichtung in einem lokalen Netz, das die folgenden Schritte umfasst:
Rundsenden einer Anforderung von einer Konfigurationsstation (24) auf dem lokalen Netz (22);
Empfangen einer Antwort auf die Anforderung bei der Konfigurationsstation (24) von der Netz-Modemvorrichtung, die eine Kennung für die Netz-Modemvorrichtung enthält, wobei die Kennung wenigstens eine IP-Adresse für die Netz-Modemvorrichtung (22) umfasst;
Verifizieren der Kompatibilität der Kennung mit Einstellungen für das lokale Netz;
falls die Kennung mit den Einstellungen kompatibel ist, Senden einer Bestätigungsnachricht mit der Kennung zu der Netz-Modemvorrichtung und Empfangen einer Bestätigungsantwort von der Netz-Modemvorrichtung;
falls die Kennung mit den Einstellungen nicht kompatibel ist, Senden einer neuen Adressennachricht, die eine neue IP-Adresse für die Netz-Modemvorrichtung enthält, Empfangen einer IP-Antwort-Änderung von der Netz-Modemvorrichtung, Senden einer neuen Adressenbestätigungsnachricht mit der neuen IP-Adresse zu der Netz-Modemvorrichtung und Empfangen einer Antwort zur Bestätigung der neuen Adresse von der Netz-Modemvorrichtung.

11. Verfahren nach Anspruch 10, bei dem die Anforderung durch die Konfigurationsstation eine Rundsendenachricht enthält und die Kennung eine IP-Adresse, eine MAC-Adresse und einen internen DHCP-Server-Status für die Netz-Modemvorrichtung umfasst.

12. Verfahren nach Anspruch 11, bei dem die Nachrichten von der Konfigurationsstation (24) und die Antworten von dem Modem (10) an einem proprietären Port gesendet werden.

13. Verfahren nach Anspruch 11 oder 12, bei dem das Modem ferner einen integrierten DHCP-Server (16) enthält und die von dem Modem gesendete Nachricht ferner einen Aktivierungsstatus des DHCP-Servers enthält.

14. Verfahren nach Anspruch 13, bei dem das Modem das Vorhandensein eines Netz-DHCP-Servers (28) in dem lokalen Netz (22) automatisch erfasst und den integrierten DHCP-Server (16) sperrt, wenn in dem lokalen Netz (22) ein Netz-DHCP-Server (28) vorhanden ist.

15. Verfahren nach einem der Ansprüche 10 bis 14, bei dem die Vorrichtung ein Digitalnetz-Modem ist.

16. Verfahren nach Anspruch 15, bei dem die Vorrichtung ein ISDN-Modem ist.

17. Verfahren nach einem der Ansprüche 10 bis 16, das ferner ein Parametereinstellungs-Schnittstellensystem umfasst, das ermöglicht, Modemparameter durch eine entfernte Verbindung über das lokale Netz (22) einzustellen.

18. Verfahren nach Anspruch 17, bei dem das Schnittstellensystem durch einen Web-Host-Mechanismus bereitgestellt wird.

19. Verfahren nach Anspruch 18, bei dem der Web-Host-Mechanismus die Sicherung der Modemparameter in der entfernten Verbindung und die Wiederherstellung der Modemparameter von der entfernten Verbindung bereitstellt.

20. Computerprogramm, das Codemittel enthält, die in einem computerlesbaren Medium ausgeführt sind und, wenn sie in einen Computer geladen werden, alle Verfahrensschritte nach einem der Ansprüche 10 bis 19 ausführen.

21. Computerprogramm, das Codemittel enthält, die in einem elektrischen oder elektromagnetischen Signal ausgeführt sind und, wenn sie in einen Computer geladen werden, alle Verfahrensschritte nach einem der Ansprüche 10 bis 19 ausführen.

## Revendications

1. Un dispositif de configuration de modem réseau connecté à un modem (10) via un réseau local (22), le dispositif comprenant :
un premier module envoyant une requête sur le réseau local (22) au modem (10) afin d'obtenir des données d'identification et d'adresse statique IP dudit modem;
un second module recevant une réponse du modem et affichant l'adresse IP statique du modem;
un troisième module acceptant une entrée d'un usager pour configurer l'adresse IP statique; et
une quatrième module envoyant une requête au modem sur le réseau local afin de configurer l'adresse IP statique.

2. Le dispositif tel que revendiqué à la revendication 1 comprenant de plus un cinquième module pour tester l'adresse IP statique sur le réseau et pour parvenir le quatrième module d'envoyer la requête sur le réseau local au modem afin de configurer l'adresse IP statique et d'effectuer soit l'affichage d'un message d'erreur soit la demande à l'usager d'entrer des nouvelles données pour l'adresse IP statique dans le cas où le test échoue pour valider l'opération de l'adresse statique pour le modem.

3. Le dispositif tel que revendiqué dans une des revendications 1 et 2, dans lequel le premier module envoie un message de découverte diffusé sur le réseau local (22) au modem (10) afin de solliciter une réponse identifiant le modem, ledit second module recevant et décodant une réponse du modem pour obtenir l'identification et l'adresse IP statique et dans lequel le quatrième module diffuse au modem sur le réseau local un message comprenant ladite identification du modem et une identification de l'adresse statique configurée.

4. Le dispositif tel que revendiqué aux revendications 2 ou 3, dans lequel le message diffusé envoyé par le premier et le quatrième module, est reçu par le second module et transmis sur un port propriétaire.

5. Le système tel que revendiqué dans une des revendications 1 à 4, comprenant de plus un système d'interface pour configurer un paramètre permettant aux paramètrex du modem d'être configuré au dispositif (24).

6. Le dispositif tel que revendiqué à la revendication 5, dans lequel le système d'interface, pour configurer un paramètre, comprend un mécanisme de sauvegarde et de restauration permettant aux paramètres du modem d'être sauvegardés dans une unité externe au modem et d'être restaurés à partir de cette unité au modem.

7. Le dispositif tel que revendiqué aux revendications 5 et 6, dans lequel le système d'interface pour configurer le paramètre est fourni par un navigateur web affichant des pages demandées par le modem, le dispositif comprenant de plus un sixième module pour lancer ledit navigateur web avec une requête HTTP adressée à ladite adresse statique.

8. Le dispositif tel que revendiqué dans une des revendications 5, 6 et 7, dans lequel le modem est un modem RNIS, les paramètres du modem étant sélectionnés dans un groupe comprenant des paramètres de configuration DHCP, les paramètres DNS, et les paramètres de connection RNIS.

9. Le dispositif tel que revendiqué dans une des revendications 1 à 8, dans lequel le dispositif est une unité client comprenant de plus un septième module permettant que la configuration réseau de la station prenne en considération les changements sur le réseau local dûs à l'addition du modem sur le réseau local.

10. Une méthode pour initialiser une adresse IP statique sur un dispositif de modem réseau sur un réseau local, comprenant les étapes de :
diffuser une requête à partir d'une station de configuration (24) sur le réseau local 22;
la réception d'une réponse à cette requête à la station de configuration (24) à partir du dispositif de modem réseau (10) comprenant une identification pour le dispositif de modem réseau, l'identification comprenant au moins une adresse IP pour le dispositif de modem réseau (22);
la vérification de la compatibilité de cette identification avec les paramètres pour le réseau local;
si cette identification est compatible avec les paramètres pour le réseau, l'envoi d'un message de confirmation avec cette identification au dispositif de modem réseau et la réception d'une confirmation dudit dispositif de modem réseau;
si l'identification n'est pas compatible avec les paramètre pour le réseau, l'envoi d'un nouveau message d'adresse comprenant une nouvelle adresse IP pour le dispositif de modem réseau, la réception d'un changement d'adresse IP du dispositif modem réseau, l'envoi d'un message de confirmation de la nouvelle adresse avec la nouvelle adresse IP pour le dispositif de modem réseau et la réception d'une confirmation de la nouvelle adresse provenant du dispositif de modem réseau.

11. La méthode telle que revendiquée à la revendication 10, dans laquelle la requête par la station de configuration comprend un message de diffusion, et l'identification comprend une adresse IP, une adresse MAC et le statut d'un serveur DHCP pour le dispositif de modem réseau.

12. La méthode telle que revendiquée à la revendication 11, dans laquelle les messages provenant de la station de configuration (24) et les réponses du modem (10) sont envoyés sur un port propriétaire.

13. La méthode telle que revendiquée à la revendication 11 ou 12, dans laquelle le modem comprend de plus un serveur intégré DHCP (16), et le message envoyé du modem comprend de plus un statut d'activation dudit serveur DHCP.

14. La méthode telle que revendiquée à la revendication 13, dans laquelle le modem détecte automatiquement la présence d'un serveur réseau DHCP (28) sur le réseau local (22), et désactive le serveur intégré DHCP (16) quand un serveur DHCP réseau (28) est présent sur le réseau local (22).

15. La méthode telle que revendiquée dans une des revendications 10 à 14, dans laquelle le dispositif est un modem réseau numérique.

16. La méthode telle que revendiquée à la revendication 15, dans laquelle ledit dispositif est un modem RNIS.

17. La méthode telle que revendiquée en une des revendications 10 à 16 comprenant de plus un système de configuration de paramètres permettant de configurer les paramètres du modem par une connection distante à travers le réseau local (22).

18. La méthode telle que revendiquée à la revendication 17, dans laquelle le système d'interface est fourni par un mécanisme de serveur hôte.

19. La méthode telle que revendiquée à la revendication 18, dans laquelle le mécanisme de serveur hôte fourni permet la sauvegarde des paramètres du modem et la restauration des paramètres du modem à partir de la connection distante.

20. Un programme informatique comprenant du code contenu sur un support qui peut être lu par un ordinateur et qui permet d'effectué, lorsque qu'exécuté, une des revendications 10 à 19.

21. Un programme informatique comprenant un code contenu dans un signal électrique ou électromagnétique qui lorsqu'il est lu dans un ordinateur, exécute une des revendications 10 à 19.
